# EUROPEAN PATENT APPLICATION

(11) **EP 3 054 530 A1**
(43) Date of publication of application: **10.08.2016**
(21) Application number: 14850045.7
(22) Date of filing: 04.07.2014
(51) Int. Cl.: H01R 4/02, B60S 1/02, H01Q 1/32, H01R 11/11

(54) **TERMINAL STRUCTURAL BODY AND VEHICLE GLASS BODY**

(30) Priority: 30.09.2013 JP 2013204635
(71) Applicant: Nippon Sheet Glass Company, Limited, Tokyo 108-6321 (JP)
(72) Inventor: KATAKURA, Seiji, Tokyo 108-6321 (JP)
(74) Representative: Webster, Jeremy Mark
(86) International application number: PCT/JP2014/067895
(87) International publication number: WO 2015/045548

(57) **Abstract**

Provided is a terminal structure body that is to be electrically connected to a conductive body arranged on a glass for a vehicle. The terminal structure body includes: a first connection portion that is to be soldered to the conductive body and is to be electrically connected to the conductive body via solder; a second connection portion that is directly or indirectly fixed to the first connection portion and is to be adhered to at least one of the glass and the conductive body with adhesive; and a thermal shielding portion that is provided between the first connection portion and the second connection portion and is for preventing heat at a time of melting the solder from being transmitted from the first connection portion to the second connection portion. The solder is lead-free solder.

## Description

### Technical Field

The present invention relates to a terminal structure body electrically connected to a conductive body arranged on a glass for a vehicle, and to a glass body for a vehicle including the same.

### Background Art

Conventionally, a de-icer for removing frost and fogginess is sometimes mounted on a glass for a vehicle, and mainly on a windshield. A de-icer is a device that supplies power to a conductive body such as a wire arranged on a glass for a vehicle, thereby heating the glass. Also, an antenna circuit is sometimes mounted on the glass for a vehicle, and in this case as well, power needs to be supplied to a conductive body arranged on the glass. With the devices above, it is necessary to electrically and mechanically connect the conductive body arranged on the glass for a vehicle and a terminal structure body for supplying power to the conductive body, and in many cases, soldering of the conductive body and the terminal structure body is performed.

However, in general, there is concern that the use of solder will influence the environment due to lead components included in the solder. For this reason, use of environmentally-friendly lead-free solder is considered, but with lead-free solder, it is difficult to sufficiently achieve both electrical connectivity and mechanical connectivity. Alternatively, ensuring electrical connectivity by using conductive adhesive instead of solder is also considered. However, if adhesive with a high electrical connectivity is used, the mechanical connectivity often decreases, or high-cost adhesive is needed. In view of this, in Patent Literature 1, a configuration is used in which solder with little influence on the environment and adhesive are used together. That is, by using solder with little influence on the environment, electrical connectivity is ensured with consideration given to the environment, and adhesive strength is ensured using adhesive with high mechanical connectivity.

### Citation List

### Patent Literature

Patent Literature 1: JP 2003-521093A

### Summary of Invention

### Technical Problem

Incidentally, Patent Literature 1 proposes use of hot melt adhesive, stating that it is preferable to use the heat at the time of melting of solder in the melting of the adhesive as well. However, since there are circumstances such as this kind of hot melt adhesive generally being high-cost, it is desirable to be able to use an adhesive that is as low-cost as possible. Also, in Patent Literature 1, the same sheet made of metal that constitutes the terminal structure body is soldered and coated with the adhesive. For this reason, the adhesive may deteriorate due to the heat at the time of melting of the solder, and there is a risk that the adhesive strength of the adhesive will not necessarily be sufficient.

The present invention aims to provide a terminal structure body that, in the case of using both environmentally-friendly lead-free solder and adhesive, can prevent the adhesive from deteriorating due to heat at a time of melting the solder, regardless of the type of the adhesive, and to provide a glass body for a vehicle including the same.

### Solution to Problem

A terminal structure body according to a first aspect of the present invention is a terminal structure body that is to be electrically connected to a conductive body arranged on a glass for a vehicle, and includes a first connection portion, a second connection portion, and a thermal shielding portion. The first connection portion is to be soldered to the conductive body and is to be electrically connected to the conductive body via solder. The second connection portion is directly or indirectly fixed to the first connection portion and is to be adhered to at least one of the glass and the conductive body with adhesive. The thermal shielding portion is provided between the first connection portion and the second connection portion and prevents heat at a time of melting the solder from being transmitted from the first connection portion to the second connection portion. The solder is lead-free solder.

Here, the lead-free solder and the adhesive are both used to connect the terminal structure body and the conductive body arranged on the glass for a vehicle. That is, a configuration is used in which the lead-free solder mainly achieves the electrical connection of these elements and the adhesive mainly achieves the mechanical connection of these elements. Accordingly, by using the lead-free solder, it is possible to ensure electrical connectivity while giving consideration to the environment. Furthermore, by using the adhesive, which has a high mechanical connectivity, it is possible to ensure the adhesive strength. Also, here, in the terminal structure body, the region coated with the adhesive (second connection portion) is thermally shielded from the region in which soldering is performed (first connection portion). Accordingly, in the case of using both the environmentally-friendly lead-free solder and the adhesive, it is possible to prevent the adhesive from deteriorating due to the heat at the time of melting the solder, regardless of the type of the adhesive.

The terminal structure body according to a second aspect of the present invention is the terminal structure body according to the first aspect and furthermore includes a wire fixing portion. The wire fixing portion fixes a wire for supplying power to the first connection portion. Accordingly, it is possible to steadily supply power to the first connection portion, and by extension, to the conductive body arranged on the glass.

A terminal structure body according to a third aspect of the present invention is the terminal structure body according to the second aspect, in which the wire fixing portion is a tunnel-shaped member. Accordingly, heat at the time of melting the solder escapes more easily, and it is possible to furthermore prevent deterioration of the adhesive.

A terminal structure body according to a fourth aspect of the present invention is the terminal structure body according to the second or third aspect, in which the wire fixing portion includes a contact region that comes into contact with the wire. A point of application of an external force received from the wire in the contact region is provided at a position closer to the second connection portion than to the first connection portion.

If the wire flutters due to being pulled or the like, an external force is applied also to the terminal structure body to which the wire is fixed, and there is a risk that the terminal structure body attached to the glass for a vehicle will fall off. However, here, the point of application at which the external force is thought to be concentrated in the terminal structure body when the wire flutters is provided closer to the second connection portion, which achieves the mechanical connection, than to the first connection portion, which achieves the electrical connection. Accordingly, it is possible to prevent the terminal structure body from falling off of the glass for a vehicle due to the fluttering of the wire.

A terminal structure body according to a fifth aspect of the present invention is the terminal structure body according to any of the second to fourth aspects, in which the second connection portion is arranged on both sides of the wire in a state of being fixed to the wire fixing portion.

Here, the second connection portion, which achieves the mechanical connection, is arranged on both sides of the wire. Accordingly, it is possible to prevent the terminal structure body from falling off of the glass for a vehicle due to the fluttering of the wire.

A terminal structure body according to a sixth aspect of the present invention is the terminal structure body according to the fifth aspect, in which the first connection portion is arranged downstream of the second connection portion along the wire, and on both or one side of the wire in a state of being fixed to the wire fixing portion. Here, an optimal arrangement is provided while giving consideration to the problem of fluttering of the wire.

A terminal structure body according to a seventh aspect of the present invention is the terminal structure body according to any of the second to sixth aspects, in which the first connection portion, the second connection portion, and the wire fixing portion are constituted by an integrated plate-shaped member. Accordingly, here, the terminal structure body can be manufactured easily.

A terminal structure body according to an eighth aspect of the present invention is the terminal structure body according to any of the first to seventh aspects, in which the thermal shielding portion is a space that separates the first connection portion and the second connection portion. Accordingly, here, it is possible to thermally shield the second connection portion from the first connection portion using a simple configuration.

A terminal structure body according to a ninth aspect of the present invention is the terminal structure body according to any of the first to eighth aspects, in which the thermal shielding portion is a member constituted by a material with a lower thermal conductivity than the first connection portion. Accordingly, here, it is possible to suppress the transmission of heat from the first connection portion to the second connection portion.

A glass body for a vehicle according to a tenth aspect of the present invention includes a glass for a vehicle and the terminal structure body according to any of the first to ninth aspects. Here, it is possible to achieve an effect similar to that of the first aspect.

A glass body for a vehicle according to an eleventh aspect of the present invention is the glass body for a vehicle according to the tenth aspect, in which the glass includes a plate-shaped glass main body, and a black ceramic coating layer arranged near a peripheral edge portion of the glass main body, and the second connection portion is adhered on the coating layer. Here, since the second connection portion is adhered on the black ceramic by the adhesive, the terminal structure body is fixed more firmly.

### Advantageous Effects of Invention

With the present invention, the lead-free solder and the adhesive are both used to connect the terminal structure body and the conductive body arranged on the glass for a vehicle. Accordingly, by using the lead-free solder, it is possible to ensure electrical connectivity while giving consideration to the environment. Furthermore, by using the adhesive, which has a high mechanical connectivity, it is possible to ensure the adhesive strength. Furthermore, in the case of using both the lead-free solder and the adhesive, it is possible to prevent the adhesive from deteriorating due to the heat at the time of melting the solder, regardless of the type of the adhesive.

### Brief Description of Drawings

FIG. 1 is an external perspective view of a terminal structure body according to an embodiment of the present invention.
FIG. 2 is a front view of a windshield of a vehicle to which a terminal structure body is attached.
FIG. 3A is a plan view of a conductive sheet member for molding a terminal structure body. FIG. 3B is a cross-sectional side view along B1-B1 in FIG. 3A.
FIG. 4A is a plan view of a terminal structure body. FIG. 4B is a cross-sectional side view along B2-B2 in FIG. 4A.
FIG. 5 is a bottom view of a terminal structure body to which a wire is fixed.
FIG. 6 is a cross-sectional side view along B3-B3 in FIG. 2.
FIG. 7 is a plan view of a terminal structure body according to a modified example.
FIG. 8 is a plan view of a terminal structure body according to another modified example.
FIG. 9 is a bottom view of a terminal structure body according to yet another modified example.
FIG. 10 is a plan view of a terminal structure body according to yet another modified example.

### Description of Embodiments

Hereinafter, an embodiment of a terminal structure body and a glass body for a vehicle including the same according to the present invention will be described with reference to the drawings.

### 1. Overall Configuration

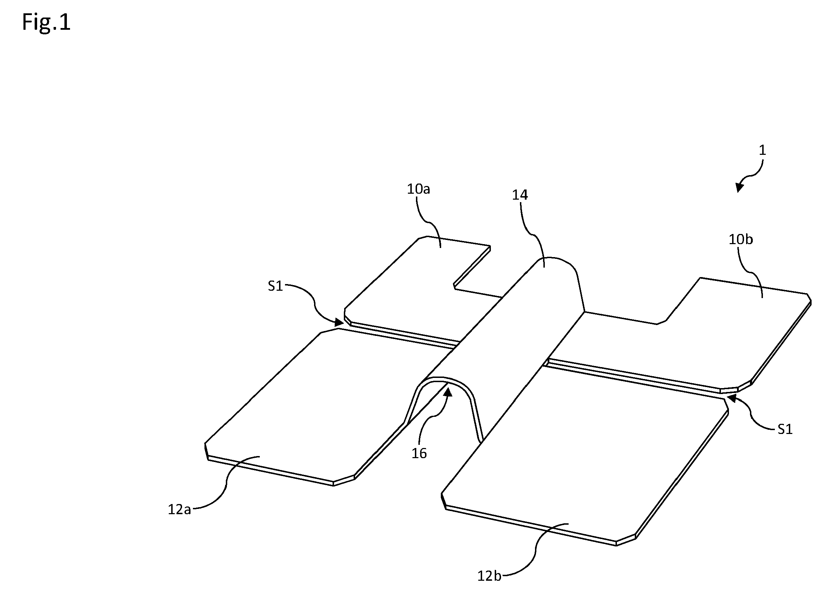

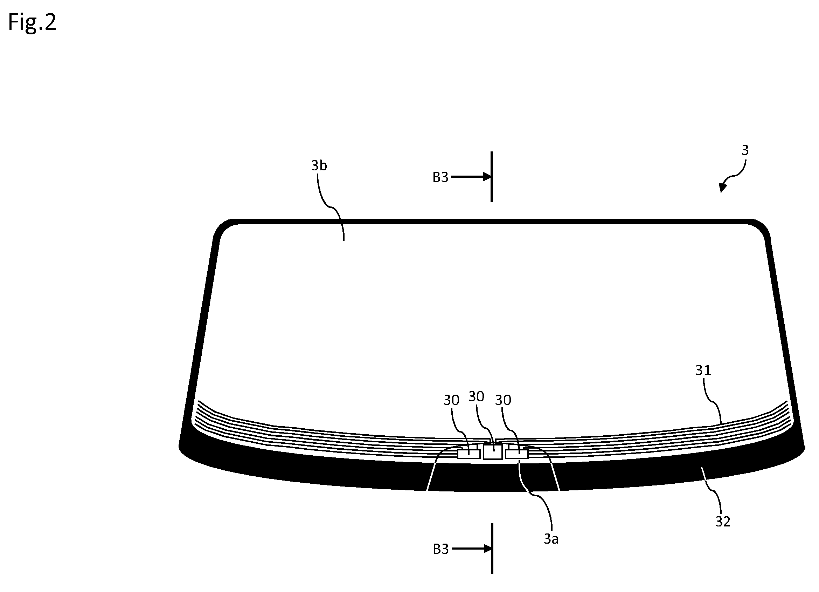

FIG. 1 shows an external perspective view of a terminal structure body 1, which is a terminal structure body according to an embodiment of the present invention, and FIG. 2 shows a front view of a windshield 3 of a vehicle to which the terminal structure body 1 is attached. The terminal structure body 1 constitutes a portion of a de-icer for removing frost and fogginess on the windshield 3. A de-icer is a device that supplies power to conductive substrates 30 arranged on the windshield 3 and heats the windshield using the conductive substrates 30.

As shown in FIG. 2, the conductive substrates 30 constituting a portion of the de-icer are installed near the center of the lower portion of the windshield 3. In the present embodiment, multiple conductive substrates 30 are provided in alignment, but it is also possible for only one to be provided. Note that two to three conductive substrates 30 are typically provided. Also, many wires 31 that extend from the conductive substrates 30 are distributed on the windshield 3. For this reason, power supplied from an external power supply to the conductive substrates 30 via the terminal structure body 1 is transmitted to the wires 31, whereby various regions of the windshield 3 are heated. Note that the installation locations of the conductive substrates 30 and the wires 31 can be changed as needed, but in the present embodiment in which the conductive substrates 30 are arranged near the center of the lower portion of the front glass 3, heating is performed mainly near the wipers (not shown).

The terminal structure body 1 is a structure body for receiving power from an external power supply and supplying it to a conductive substrate 30, and is attached at a position opposing the conductive substrate 30 on the windshield 3. Solder 5 and adhesive 6 are used to connect the terminal structure body 1 and the conductive substrate 30. The solder 5 mainly achieves the electrical connection of these elements, and the adhesive 6 mainly achieves the mechanical connection of these elements. With consideration given to the burden on the environment, lead-free solder is used as the solder 5. Hereinafter, a specific configuration of the terminal structure body 1 will be described, whereafter an example of attaching the terminal structure body 1 to the windshield 3 will be described.

### 2. Detailed Configuration of Terminal Structure Body

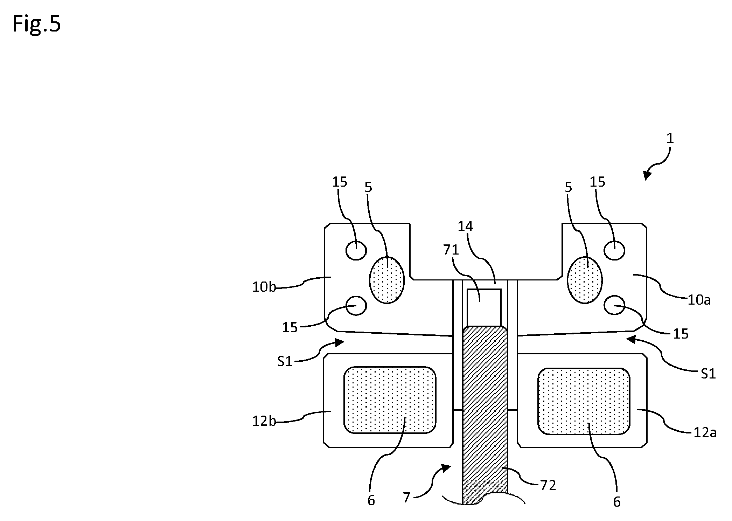

As shown in FIG. 1, the terminal structure body 1 includes a left and right pair of wing-shaped first connection plates 10a and 10b, a left and right pair of wing-shaped second connection plates 12a and 12b, and a wire fixing portion 14 that joins these connection plates 10 and 12. The first connection plates 10a and 10b are regions soldered to the conductive substrate 30 on the windshield 3, and the second connection plates 12a and 12b are regions connected by the adhesive 6 to a later-described black ceramic coating layer 32 on the windshield 3. Accordingly, the solder 5 that has been solidified is attached near the central portions of the lower surfaces of the first connection plates 10a and 10b (see FIG. 5). Also, as will be described later, the lower surfaces of the second connection plates 12a and 12b are coated with the adhesive 6 at the time of arranging the terminal structure body 1 on the windshield 3 (see FIG. 5). In the present embodiment, non-hot-melt adhesive, which is non-conductive but has high adhesive capability, is used as the adhesive 6. For example, reactive adhesive with a lower cost than that of hot melt adhesive can be used as this kind of adhesive. There is two-component reactive adhesive that starts reacting upon being mixed, and one-component reactive adhesive which starts reacting due to an external factor such as moisture absorption. Specifically, there is epoxy resin-based adhesive and urethane resin-based adhesive. The softening temperature of this kind of adhesive is, for example, 350°C or less. Note that the softening temperature can be measured in accordance with JIS K6833.

The above-described wire fixing portion 14 is arranged between the left wings 10a and 12a and the right wings 10b and 12b in plan view. The wire fixing portion 14 is a tunnel-shaped member that is U-shaped in cross section and extends in a straight line, and a wire 7 connected to the external power supply is received inside the tunnel and fixed so as to extend along the tunnel (FIG. 5). The first connection plates 10a and 10b are arranged on both sides of the wire fixing portion 14 so as to sandwich it, and the second connection plates 12a and 12b are arranged in a similar manner. Accordingly, the first connection plates 10a and 10b as well as the second connection plates 12a and 12b are fixed to each other via the wire fixing portion 14. Note that the first connection plates 10a and 10b are symmetrical with respect to the wire 7 in a state of being fixed to the wire fixing portion 14, and the second connection plates 12a and 12b are similar thereto.

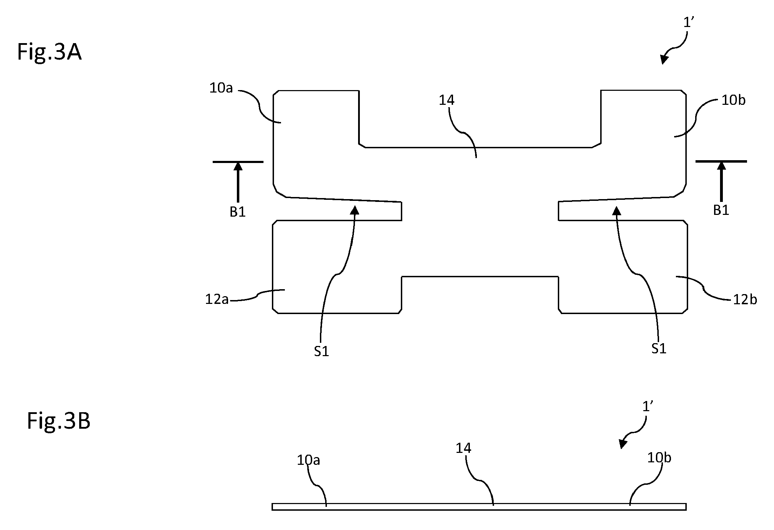

The first connection plates 10a and 10b, the second connection plates 12a and 12b, and the wire fixing portion 14 are configured integrally with each other, and specifically, they are formed by bending a conductive sheet member. FIGS. 3A and 3B show a sheet member 1' before forming by bending, and as is clear by comparing FIG. 1 and FIGS. 3A and 3B, the terminal structure body 1 in the shape shown in FIG. 1 is formed by bending the center of the sheet member 1' so that a protrusion along a straight line is formed. Accordingly, in the present embodiment, the terminal structure body 1 can be given a simple configuration. Also, the terminal structure body 1 is made of metal, and from the viewpoint of improving conductivity, it is preferably made of copper, for example.

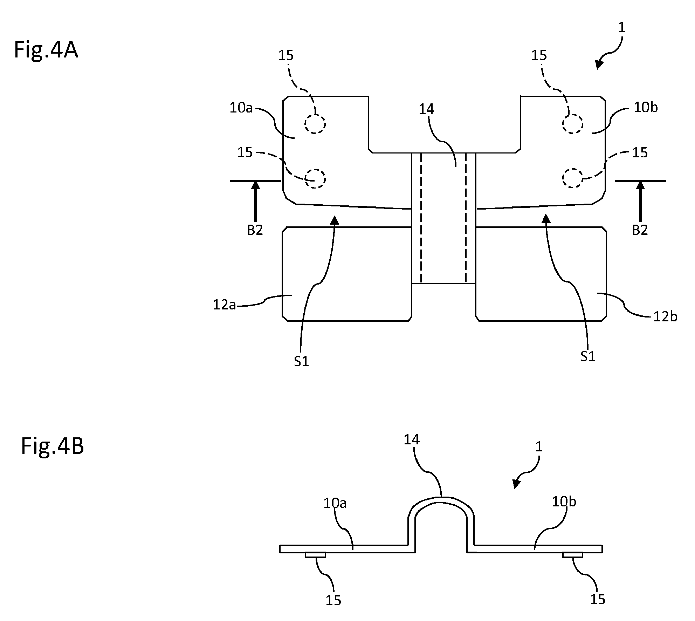

FIGS. 4A and 4B respectively show a plan view and a cross-sectional side view of the terminal structure body 1. As can be understood from these drawings, the first connection plates 10a and 10b and the second connection plates 12a and 12b are flat. Also, two protrusions 15 are formed on each lower surface of the first connection plates 10a and 10b near the left and right edges respectively. These protrusions 15 are formed in order to ensure the thickness of the solder 5 and the adhesive 6.

FIG. 5 is a bottom view of the terminal structure body 1 in a state where the wire fixing portion 14 fixes the wire 7 connected to the external power supply. The wire 7 is constituted by a metal wire 71 and an insulating cover 72 that envelops the metal wire 71, but at the end portion on the terminal structure body 1 side, the metal wire 71 is exposed from the cover 72. In the present embodiment, the exposed portion of the metal wire 71 is fixed to the wire fixing portion 14 using a mode of crimping or soldering. However, it is of course also possible to perform fixing using another mode. Also, in the tunnel of the wire fixing portion 14, the exposed portion is connected near the first connection plates 10a and 10b, and away from the vicinity of the second connection plates 12a and 12b. This is because, as will be described later, power is supplied not to the second connection plates 12a and 12b, but mainly to the first connection plates 10a and 10b. For this reason, the first connection plates 10a and 10b are arranged downstream of the second connection plates 12a and 12b along the wire 7.

Also, as shown in FIG. 1, FIGS. 4A and 4B, and the like, slit-shaped spaces S1 (thermal shielding portions) that separate the first connection plates 10a and 10b and the second connection plates 12a and 12b are disposed between the first connection plates 10a and 10b and the second connection plates 12a and 12b. These spaces S1 are spaces for preventing heat at a time of melting the solder 5 from being transmitted from the first connection plates 10a and 10b to the second connection plates 12a and 12b. Also, these spaces S1 make it easier to identify the regions of the second connection plates 12a and 12b that are to be coated with the above-described adhesive 6 (in other words, it is easier to distinguish the second connection plates 12a and 12b from the first connection plates 10a and 10b).

### 3. Example of Attaching Terminal Structure Body

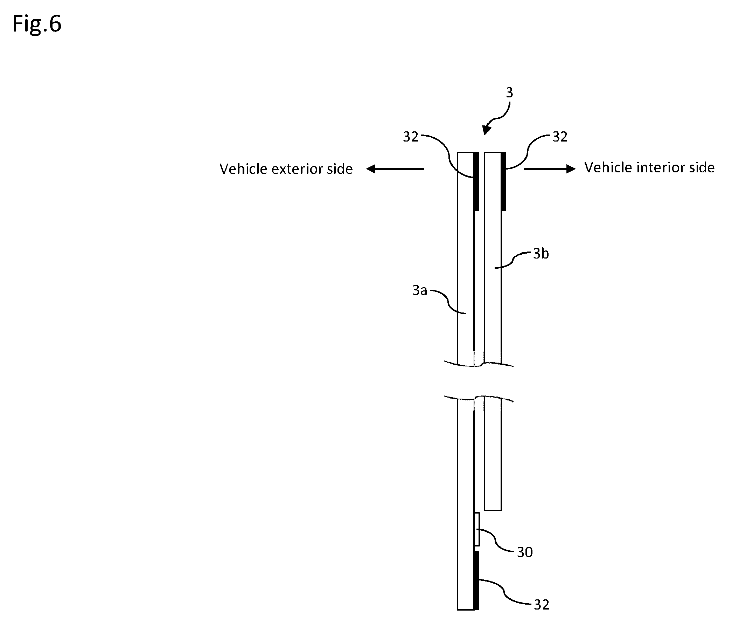

Hereinafter, an example of attaching a terminal structure body 1 to the windshield 3 will be described, but before that, the configuration of the windshield 3 to which the terminal structure body 1 is to be attached in this example will be described. As shown in FIG. 6, the windshield 3 in this example is a combined glass obtained by overlaying two sheet-shaped glasses 3a and 3b with an intermediate layer (not shown) interposed therebetween. Then, black ceramic coating layers 32 are respectively formed on the vehicle interior sides of the glasses 3a and 3b, along the outer peripheral edge portions thereof (see FIGS. 2 and 6). The coating layers 32 have a blindfolding function of making it so that the adhesive for fixing the windshield 3 to the window frame is not visible from outside of the vehicle. The coating layers 32 are composed of glass powder or the like, and are formed by screen-printing colored ceramic in the form of a paste and thereafter drying and calcining it.

Also, as shown in FIG. 2, among the glasses 3a and 3b, the vicinity of the center of the lower portion of the glass 3b on the vehicle interior side is cut out, and therefore the vicinity of the center of the lower portion of the glass 3a on the vehicle exterior side is exposed in a view from the vehicle interior. As a result, the black ceramic coating layer 32 on the lower portion of the glass 3a is partially exposed in a view from the vehicle interior. The above-described conductive substrates 30 are also arranged on the exposed portion of the glass 3a.

Next, a flow of a task of attaching a terminal structure body 1 to the windshield 3 described above will be described. First, a wire 7 is fixed to the wire fixing portion 14 of the prepared terminal structure body 1 in the above-described mode, and the wire 7 and the first connection plates 10a and 10b are electrically connected. Note that at this stage, the wire 7 has not been connected to an external power supply. Then, the lower surfaces of the second connection plates 12a and 12b of the terminal structure body 1 to which the wire 7 has been attached is coated with the adhesive 6, and the terminal structure body 1 is installed at the attachment position on the windshield 3. More specifically, the terminal structure body 1 is positioned such that the first connection plates 10a and 10b oppose a conductive substrate 30 exposed on the glass 3a and the second connection plates 12a and 12b oppose the black ceramic coating layer 32 exposed on the glass 3a.

When the positioning of the terminal structure body 1 ends, the windshield 3 and the terminal structure body 1 are temporarily fixed with a clip in order to maintain the state of being positioned until the adhesive 6 solidifies. Then, in this state, a soldering iron heated to the melting point of the solder 5 is brought into contact with the upper surfaces of the first connection plates 10a and 10b, the solder 5 on the lower surfaces of the first connection plates 10a and 10b is melted, and thereby the first connection plates 10a and 10b and the conductive substrates 30 are connected. When the soldering ends, the clip used for temporary fixing is removed. This is because the mechanical adhesiveness obtained by soldering sufficiently carries out the function of temporary fixing.

At the time of the above-described task of soldering, the heat transmitted from the soldering iron to the first connection plates 10a and 10b is not only used for melting the solder 5, but also diffuses to the outside from the first connection plates 10a and 10b. However, as described above, the first connection plates 10a and 10b and the second connection plates 12a and 12b are separated by the slit-shaped spaces S1, and therefore diffusion of the heat to the second connection plates 12a and 12b is suppressed. Also, the heat transmitted from the soldering iron to the first connection plates 10a and 10b escapes via the wire fixing portion 14 as well, and the diffusion of heat to the second connection plates 12a and 12b is suppressed by this as well. Accordingly, the adhesive 6 with which the second connection plates 12a and 12b are coated is prevented from deteriorating due to heat.

Then, the attachment of the terminal structure body 1 to the windshield 3 ends upon the elapse of an amount of time needed for the adhesive 6 to harden. Note that the task of soldering may be performed after the adhesive 6 hardens. Thereafter, the terminal structure body 1 is firmly mechanically fixed to the windshield 3 mainly due to the adhesiveness of the adhesive 6. In the present attachment example in particular, the second connection plates 12a and 12b are adhered not to the glass main body of the windshield 3, but to the black ceramic coating layer 32, and therefore the terminal structure body 1 is strongly fixed to the windshield 3. Also, after the attachment task is completed, conductive paths from the external power supply to the conductive substrates 30 are ensured via the wire 7, the wire fixing portions 14, the first connection plates 10a and 10b, and the solder 5. Accordingly, when the end portion of the wire 7 opposite to the terminal structure body 1 is connected to the external power supply thereafter, power is applied to the conductive substrates 30 on the windshield 3 via these conductive paths, and is furthermore applied to the wires 31 that are distributed on the windshield 3. As a result, the conductive substrates 30 and the wires 31 generate heat, whereby frost and fogginess on the windshield 3 are removed.

If the wire 7 flutters due to being pulled or the like after the terminal structure body 1 is attached to the windshield 3, an external force acts also on the terminal structure body 1 to which the wire 7 is fixed. Specifically, this external force is applied to a location in contact with the wire 7 on the terminal structure body 1, and is applied in particular in a concentrated manner to a portion 16 (see FIG. 1) near the entrance of the tunnel of the wire fixing portion 14. That is, the point of application of the external force caused by fluttering of the wire 7 is near the second connection plates 12a and 12b, and is a position interposed between the second connection plates 12a and 12b. Accordingly, this external force is absorbed by the strong adhesiveness of the adhesive 6, whereby the terminal structure body 1 is prevented from falling off of the windshield 3.

### 4. Characteristics

In the above-described embodiment, both the lead-free solder 5 and the adhesive 6 are used to connect the terminal structure body 1 and the conductive substrate 30 arranged on the windshield 3. That is, the terminal structure body 1 is configured such that the lead-free solder 5 mainly achieves the electrical connection of these elements, while the adhesive 6 mainly achieves the mechanical connection of these elements. Accordingly, by using the lead-free solder 5, it is possible to ensure electrical connectivity while giving consideration to the environment. Furthermore, by using the adhesive 6, which has a high mechanical connectivity, it is possible to ensure the adhesive strength. Also, in the above-described embodiment, the slit-shaped spaces S1 thermally shield the regions coated with the adhesive 6 (second connection plates 12a and 12b) in the terminal structure body 1 from the regions in which soldering is performed (first connection plates 10a and 10b). Accordingly, in the case of using both the environmentally-friendly lead-free solder 5 and the adhesive 6, it is possible to prevent the adhesive 6 from deteriorating due to the heat at the time of melting the solder 5, regardless of the type of the adhesive 6. Also, in the above-described embodiment in which non-hot-melt adhesive is used, it is possible to select the adhesive 6, which has a lower cost compared to hot melt adhesive, which generally has a high cost.

### 5. Modified Examples

In the description above, an embodiment of the present invention is described, but the present invention is not limited to the above-described embodiment and can be modified in various ways without straying from the gist thereof. For example, the following modifications are possible.

### 5-1

In the above-described embodiment, the terminal structure body 1 is used in the application of supplying power to a de-icer mounted on a windshield 3, but the terminal structure body 1 can also be used to supply power to a device other than a de-icer, such as an antenna circuit mounted on a glass for a vehicle. Moreover, it is evident that the terminal structure body 1 can also be used to supply power to a device mounted on glass other than a windshield.

### 5-2

The first connection plates 10a and 10b, the second connection plates 12a and 12b, and the wire fixing portion 14 need not be configured integrally. For example, at least one of the wire fixing portion 14 and the second connection plates 12a and 12b may be constituted by a non-conductive member, and may be fixed to the conductive first connection plates 10a and 10b using a suitable method. Note that in the case where the wire fixing portion 14 is constituted by a non-conductive member, the exposed portion at the tip of the wire 7 need only be directly connected to the first connection plates 10a and 10b in order to ensure a conductive path to the conductive substrate 30.

### 5-3

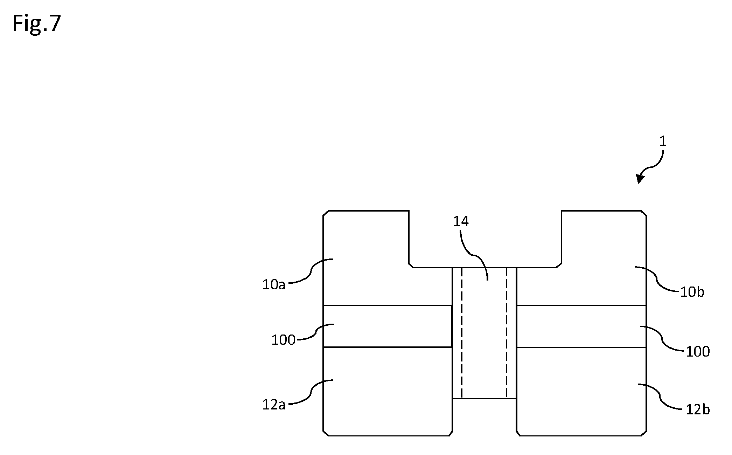

The method for preventing the transmission of heat from the first connection plates 10a and 10b to the second connection plates 12a and 12b is not limited to ensuring the spaces S1 as in the above-described embodiment. For example, as shown in FIG. 7, it is also possible to arrange thermal shielding members 100 constituted by a material with a lower thermal conductivity than the first connection plates 10a and 10b in the spaces S 1.

### 5-4

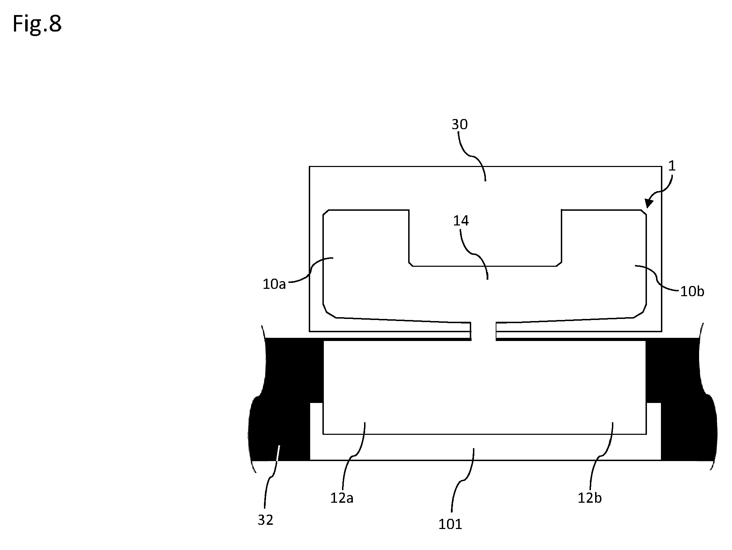

In the above-described embodiment, the first connection plates 10a and 10b and the second connection plates 12a and 12b were fixed indirectly via the wire fixing portion 14, but depending on the target to which the terminal structure body 1 is to be attached, the first connection plates 10a and 10b and the second connection plates 12a and 12b may be directly connected, and the wire fixing portion 14 may be omitted. For example, as shown in FIG. 8, the terminal structure body 1 can receive a supply of power not from a wire, but from a conductive plate-shaped material 101. Note that in the example shown in FIG. 8, the second connection plates 12a and 12b are partially arranged on the plate-shaped material 101, and the second connection plates 12a and 12b receive a supply of power from the plate-shaped material 101. In this case, the plate-shaped material 101 is connected to an external power supply. Also, the second connection plates 12a and 12b and the first connection plates 10a and 10b are connected, and current flows from the former to the latter.

Also, in addition to omitting the wire fixing portion 14, the first connection plates 10a and 10b and the second connection plates 12a and 12b may be indirectly fixed via a member other than the wire fixing portion 14.

### 5-5

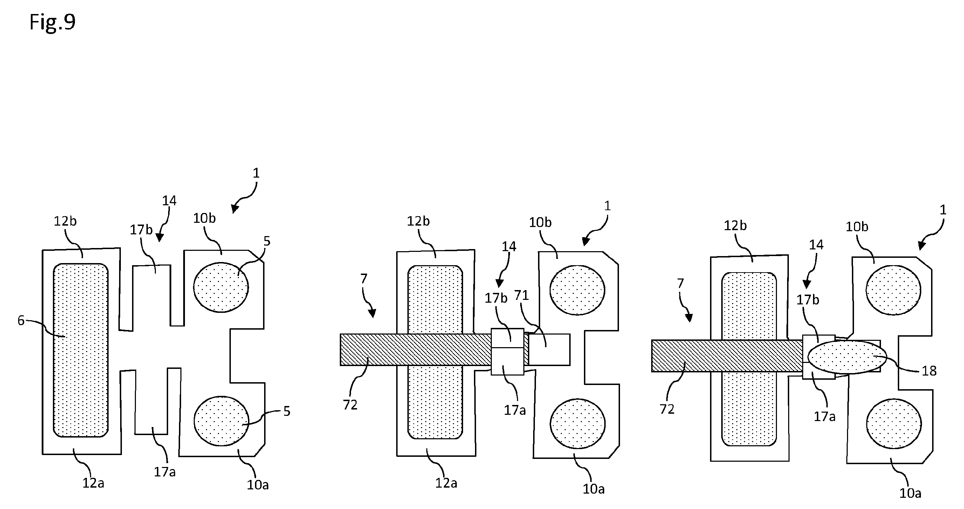

The configuration of the terminal structure body 1 is not limited to the above-described modes, and for example, modes such as those shown in FIG. 9 can be used. In this example, as shown in FIG. 9, the wire fixing portion 14 is not tunnel-shaped but plate-shaped, and the wire 7 can be fixed by wrapping a pair of wing-shaped flaps 17a and 17b formed integrally with the first connection plates 10a and 10b and the second connection plates 12a and 12b around the wire 7. In this regard, the flaps 17a and 17b, the exposed portion of the metal wire 71, and the first connection plates 10a and 10b are preferably fixed by solder 18.

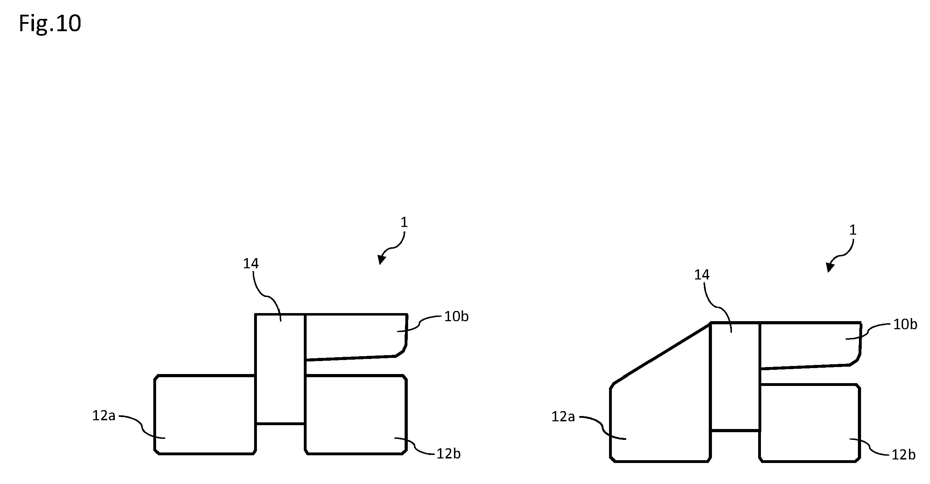

Also, as shown in FIG. 10, one of the two first connection plates can be omitted, and the shapes of the first connection plates 10a and 10b and the second connection plates 12a and 12b can be changed as appropriate, for example.

### 5-6

Conductive adhesive 6 may be used. However, because the solder 5 achieves the electrical connectivity, it is not necessary to give special consideration to the electrical connectivity in the selection of the adhesive. Accordingly, it is preferable to select an adhesive that is low-cost and has high adhesive capability.

### 5-7

The position at which the second connection plates 12a and 12b are attached is not limited to being on the black ceramic coating layer 32 of the windshield 3, and for example, may be on the glass main body of the windshield 3, which is not on the black ceramic coating layer 32, may be on the conductive substrate 30, or may be a position covering both the glass main body of the windshield 3 and the conductive substrates 30.

### Reference Signs List

- 1': 1 Terminal structure body Sheet member before forming by bending (integrated plate-shaped member)
- 3: Windshield (glass for a vehicle)
- 5: Solder
- 6: Adhesive
- 7: Wire
- 10a, 10b: First connection plate (first connection portion)
- 12a, 12b: Second connection plate (second connection portion)
- 14: Wire fixing portion
- 16: Region near entrance of tunnel (external force application point)
- 30: Conductive substrate (conductive body)
- 32: Black ceramic coating layer
- S1: Slit-shaped space (thermal shielding portion)

## Claims

1. A terminal structure body that is to be electrically connected to a conductive body arranged on a glass for a vehicle, comprising:
a first connection portion that is to be soldered to the conductive body and is to be electrically connected to the conductive body via solder;
a second connection portion that is directly or indirectly fixed to the first connection portion and is to be adhered to at least one of the glass and the conductive body with adhesive; and
a thermal shielding portion that is provided between the first connection portion and the second connection portion and is for preventing heat at a time of melting the solder from being transmitted from the first connection portion to the second connection portion,
wherein the solder is lead-free solder.

2. The terminal structure body according to claim 1, further comprising:
a wire fixing portion for fixing a wire for supplying power to the first connection portion.

3. The terminal structure body according to claim 2,
wherein the wire fixing portion is a tunnel-shaped member.

4. The terminal structure body according to claim 2 or 3,
wherein the wire fixing portion includes a contact region that comes into contact with the wire, and
a point of application of an external force received from the wire in the contact region is provided at a position closer to the second connection portion than to the first connection portion.

5. The terminal structure body according to any of claims 2 to 4,
wherein the second connection portion is arranged on both sides of the wire in a state of being fixed to the wire fixing portion.

6. The terminal structure body according to claim 5,
wherein the first connection portion is arranged downstream of the second connection portion along the wire, and on both or one side of the wire in a state of being fixed to the wire fixing portion.

7. The terminal structure body according to any of claims 2 to 6,
wherein the first connection portion, the second connection portion, and the wire fixing portion are constituted by an integrated plate-shaped member.

8. The terminal structure body according to any of claims 1 to 7,
wherein the thermal shielding portion is constituted by a space that separates the first connection portion and the second connection portion.

9. The terminal structure body according to any of claims 1 to 8,
wherein the thermal shielding portion is a member constituted by a material with a lower thermal conductivity than the first connection portion.

10. A glass body for a vehicle, comprising:
a glass for a vehicle; and
the terminal structure body according to any of claims 1 to 9.

11. The glass body for a vehicle according to claim 10,
wherein the glass includes a plate-shaped glass main body, and a black ceramic coating layer arranged near a peripheral edge portion of the glass main body, and
the second connection portion is adhered on the coating layer.
